# EUROPEAN PATENT SPECIFICATION

(11) **EP 4 513 915 B1**
(45) Date of publication and mention of the grant of the patent: **11.03.2026**
(21) Application number: 23193171.8
(22) Date of filing: 24.08.2023
(51) Int. Cl.: H04W 8/20, H04W 12/30, H04W 12/04

(54) **METHOD AND CONTROL UNIT FOR TRANSFERRING ESIM PROFILE DATA**
VERFAHREN UND STEUEREINHEIT ZUR ÜBERTRAGUNG VON ESIM-PROFILDATEN
PROCÉDÉ ET UNITÉ DE COMMANDE POUR TRANSFÉRER DES DONNÉES DE PROFIL ESIM

(43) Date of publication of application: 26.02.2025
(73) Proprietor: NXP B.V., 5656 AG Eindhoven (NL)
(72) Inventor: Nitsch, Nils Frederik, 5656 AG Eindhoven (NL)
(74) Representative: Krott, Michel

(56) References cited:
- WO-A1-2022/003266
- US-A1- 2022 399 993

## Description

### TECHNICAL FIELD

The present disclosure relates to a method of transferring eSIM profile data. Furthermore, the present disclosure relates to a control unit for performing the proposed method.

### BACKGROUND

The current security protocol defined by the GSMA for downloading and installing eSIM profiles is defined in a "one-way-street" principle. That means, once a profile is delivered (which is encrypted for a single eUICC (embedded universal integrated circuit card, e.g. SIM card of an electronic mobile communication device) only) the requirement is that the eUICC never ever will expose any data from that profile unless needed and defined by the relevant telecommunication specifications (ETSI, 3GPP etc.). With that comes a drawback that today's scenario of removing a plastic SIM from one device and put it into another device, any by that keeping all modifications done on the SIM so far, is not possible in the eSIM ecosystem. With those secret credentials a clone profile could be created, and secret network and authentication keys could be re-used, shared or exposed in an unwanted way.

Conventional eUICCs do not have resources to store the encrypted profile entirely before decryption and processing. Therefore, the profile data is sent to and decrypted/processed by the eUICC in segments in a kind of a "streaming" mode. Also, an export would be an "export-stream" where the eUICC assembles, encrypts and sends the exported profile in segments.

WO 2012/076480 A1 discloses a method for exporting on a secure server data comprised on a UICC comprised in a terminal.

WO 2022/003266 A1 describes a method for protecting a network access profile against cloning, said method comprising the following steps, implemented by a first security module: generating a secret key, using said secret key to encrypt a data packet associated with a network access profile, and sending said encrypted packet to a second security module through a logical communication channel, receiving, from the second security module, an acknowledgement of receipt representative of the correct reception of said encrypted data packet, deleting the data packet associated with the network access profile, and then sending the secret key to the second security module through the logical communication channel.

### SUMMARY

It is an object of the present invention to provide an improved method for the transmission of eSIM profile data.

According to a first aspect, the present disclosure proposes a method for transferring eSIM profile data from a first eUICC device to a target entity, as defined in claim 1.

In this way, a cloning of eSIM profile data is made largely impossible, since eSIM profile data are existent at a specific time only once on a single entity. In other words, the plain eSIM profile data are available at the receiver at a moment when the eSIM profile data has been deleted from the exporting entity. In this way, the transfer of eSIM data can be realized from any exporting entity to any receiving entity in a secure manner without the possibility to have it installed twice in two different entities. At the time, when the profile data are available for usage on the receiving entity, the property that has already been lost in the exporting entity and is therefore present on the once.

According to a further aspect, the present disclosure proposes a control unit for performing the proposed method.

According to a further aspect, the present disclosure proposes a system comprising at least two proposed control units.

In one or more embodiments, in step a. the profile encryption keys are generated together with the eSIM profile data.

In one or more embodiments, the profile encryption keys are encrypted on the first eUICC device by means of at least one key, wherein the encrypted encryption keys are suitable for a single target entity. In this way, encryption keys are generated in a secure and reliable manner according to proven methods.

According to the first aspect, in step a. the profile encryption keys are encrypted by key creation material, which has been agreed upon in a handshake process between the first eUICC device and the target entity. In this way the exporting eUICC device needs to recode only a small number of bytes of the eSIM profile data, which increases efficiency. Said recoding processes are usually performed on specific hardware components (hardware security modules, HSM) formed e.g. as plug-in cards on a server.

According to the first aspect, the profile encryption keys are decrypted by means of the key creation material.

According to the first aspect, the key creation material and the profile encryption keys are generated emphemeral. In this way, the key creation material is usable only once for a target entity, which represents a proven technology.

In one or more embodiments, the first eUICC device is arranged on a card and the target entity is a second eUICC device.

In one or more embodiments, the first eUICC device is arranged on a card and the target entity is arranged on a server. In this way, advantageously, eSIM profile data can be returned for the purpose of reassignment elsewhere.

In one or more embodiments, at least a single eSIM profile is transferred from the first eUICC device to the target entity. Of course, also more than one eSIM profile can be transferred by means of the proposed method. Also, other kind of data can be transferred from an exporting entity to a receiving entity by means of the proven method.

### BRIEF DESCRIPTION OF DRAWINGS

The above discussion/summary is not intended to describe each embodiment or every implementation of the present disclosure. The drawings and detailed description that follow also exemplify various embodiments. The aspects defined above and further aspects of the present disclosure are apparent from the examples of embodiment to be described hereinafter with reference to the appended drawings, which are explained with reference to the examples of embodiment. However, needless to say, that the disclosure is not limited to the examples of embodiments.

All illustrations in the drawings are schematical. It is noted that in different figures, similar or identical elements or features are provided with the same reference signs or with reference signs that are different from the corresponding reference signs only within the first digit. **In** order to avoid unnecessary repetitions, elements or features which have already been elucidated with respect to a previously described embodiment are not elucidated again at a later position of the description.

Various example embodiments may be more completely understood in consideration of the following detailed description in connection with the accompanying drawings, in which:
- FIG. 1: shows a system for the generation, provision and transmission of eSIM profile data;
- FIG. 2 to 4: are diagrams showing a conventional transfer of eSIM profile data;
- FIG. 5: is a diagram showing an embodiment of a result of the proposed method; and
- FIG. 6: is a flow diagram showing a proposed method.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure as defined in the claims. In addition, the term "example" as used throughout this application is only by way of illustration, and not limitation.

### DESCRIPTION OF EMBODIMENTS

In order to avoid the creation of a clone of eSIM profile data, a modification of the existing GSMA security protocol and the format of the data is proposed to be changed. A basic idea of the present disclosure is that keys, that are used to encrypt exported eSIM profile data are retrievable from a target entity (e.g. a target eUICC device) only after the eSIM profile data has been completely exported and, furthermore, has been completely deleted from the exporting eUICC device. This can e.g. be provided by means of an "atomic" operation, which is an operation in which the key storage and deletion of the exported profile are written to the memory of the eUICC device in an atomic way so that either both actions are performed and persistent in the memory or none.

This then leads automatically to the fact that the encrypted profile can only be decrypted by the receiving entity in case the exported profiles is really deleted from the exporting eUICC device and therefore no clones are possible.

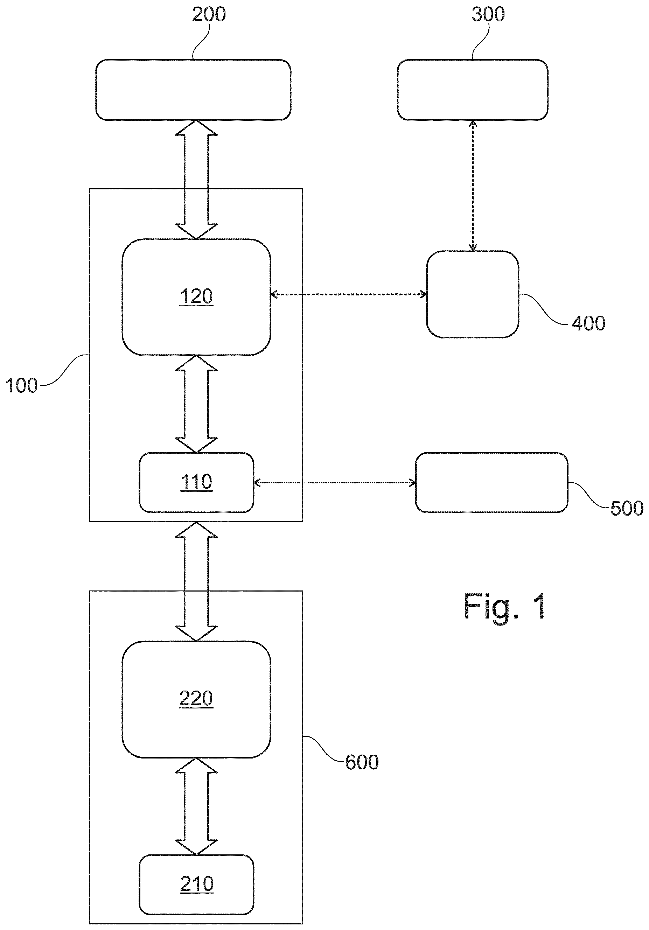

FIG. 1 shows a structure of a system for generation, provision and transmission of eSIM profile data, wherein components of the shown system may be used to perform the proposed method.

Conventionally, loading of profile data is a one-way-path process. Once downloaded from a server 200 to a receiving eUICC device, the eSIM profile data never comes out again from the receiving eUICC device. Of course, the eSIM profile data could be deleted, however then they are lost. A corresponding notification goes to the server 200, informing the server 200, that the eSIM profile has successfully been deleted. The server 200 then can transfer the eSIM profile data to another user. However, this is the initial profile as having been uploaded to server 200 long time ago. Latest eUICC devices allow also more than one profile activate at the same time ("Dual-SIM" feature).

One recognizes a GSMA RSP architecture in a simplified way. eUICC devices 110, 210 provisioned by an eUICC device manufacturer (EUM) 500 with unique ID and trust (keys, certificates, etc.) only allow secure profile loading in the field. The eUICC device manufacturer 500 may represent an electronic chip manufacturer. Devices with eUICC devices 110, 210 need connectivity to a profile provider server 200 (SM-DP+, Subscription Manager Data Preparation System) being arranged in the cloud or in a data center, e.g. via WiFi or companion device (smartwatch connected to a smartphone), etc. A mobile network operator (MNO) 300 prepares eSIM profile data (not shown) for a specific eUICC device 110, 210 after having finalized a contract with an end user 400. A first eUICC device 110 represents an exporting entity being arranged on a card and transfers eSIM profile data securely e.g. to a server 200 via a first device application (LPA) 120 which is a software using ephemeral keys (ECC based). Alternatively, as also shown in FIG. 1, the exporting 1^{st} eUICC device may export eSIM profile data securely to a target entity formed as a second eUICC device 210 being arranged on a second control unit 600 with a second device application 220.

The first (exporting) eUICC device 110 may contain more than one eSIM profile. The data preparation system is available to all operators that store eSIM profiles, as this system safely downloads the data into the eUICC device.

The present disclosure proposes a method and a control unit, which enable the transfer of eSIM profile data between different entities. E.g. between two devices which are coupled via Bluetooth and which are able to transfer eSIM profile data from a first coupled device to a second coupled device by means of the proposed method.

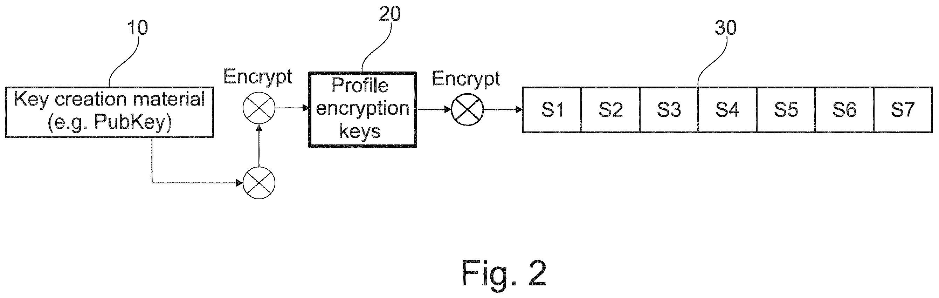

FIG. 2 shows in principle that in a conventional process eSIM profile data 30 are "forward encrypted" in a way relying e.g. on ECC based Diffi-Hellman key derivation. Firstly, ephemeral key pair (ECC) creation takes place on a server (not shown) and a target eUICC (not shown). Then, an exchange of key creation material 10 (e.g. Public key) takes place between the server and the target eUICC. A creation of symmetric key material based on Diffi-Hellman shared secret creation plus key derivation on server and eUICC. An entire "bound profile package" (BPP) with eSIM profile data 30 with segments S1...S7 is then sent to a target eUICC device, wherein the key creation material 10 and the profile encryption keys 20 are sent along, but encrypted with the key material 10 created in the previous steps described. Due to the technical restrictions of the underlying transport protocol towards the eUICC device and limited resources of an eUICC device, the bound profile package with the eSIM profile data 30 is sent to the eUICC device in segments S1... S7 and decrypted and processed/installed in segments S1...Sn and not as a single big block of data.

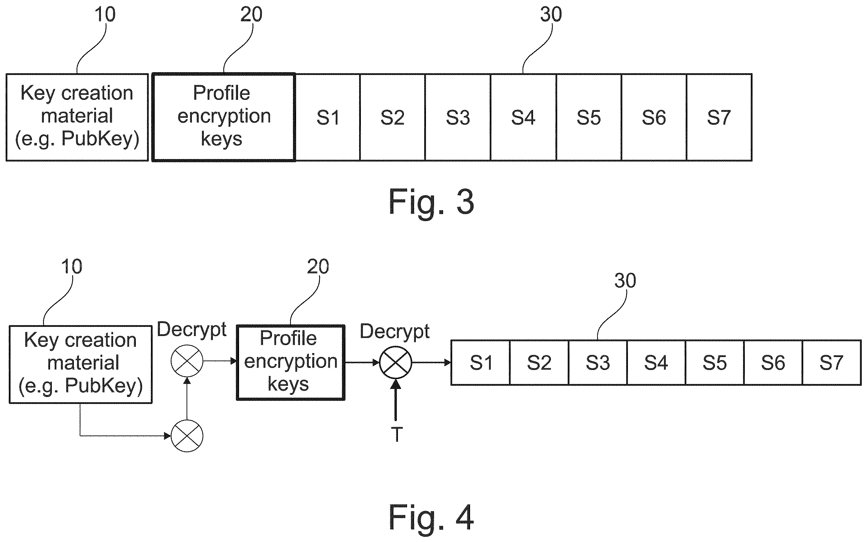

FIG. 3 shows in principle that the receiving eUICC device receives the packages in the shown abstract format and order (from left to right as a data stream).

In this way, so called "forward encryption only" is performed, designed for partial decryption and partial processing in a streaming-mode. Once the target eUICC device starts receiving the profile package (in a streaming mode) the target eUICC device can directly decrypt the data and may get access to secret data (e.g. keys, etc.) of the eSIM profile data 30. In this way, no export of profile from eUICC device to server and/or peer2peer to other eUICC devices is foreseen.

FIG. 4 shows in principle that the decryption on the target eUICC device works analog to the encryption process having described with reference to FIG. 2. As indicated, the receiving eUICC device can start decrypting already partially retrieved data right after receiving the profile encryption keys 20. However, at this point in time, it would not be ensured that the exporting eUICC device has already completely exported nor deleted the eSIM profile. At a time T, the receiving entity can start decrypting the (partially) received data. In this way, an attacker might be able to generate one or several clones of the transferred eSIM profile.

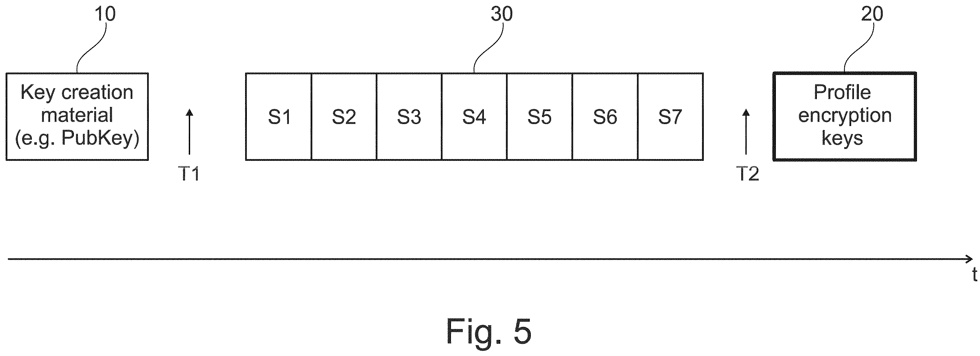

FIG. 5 shows in principle a proposed concept, in which the profile encryption keys 20 are generated by the exporting first eUICC device 110 before starting the profile encryption, but only sends, respectively makes them available to a receiving entity (e.g. target eUICC device, server, etc.) after completion of eSIM profile data profile transfer and deletion of the eSIM profile data on the exporting entity. This results in a data export structure as shown in FIG. 5.

One recognizes a timeline with time t, wherein at a time T1 the exporting first eUICC device 110 creates the profile encryption keys 20, but keeps them safely stored internally. At a time T2, the exporting first eUICC device 110 deletes the eSIM profile data 30 and makes the profile encryption keys 20 available in order that the target entity can decrypt the transferred encrypted eSIM profile data 30 and can install the decrypted eSIM profile data on the target entity.

In this way, due to the fact, that the exported data structure only contains non-sensitive or encrypted data blocks, any intermediate instance (e.g. with much more technical resources than an eUICC device) on the way to the receiving eUICC device, at latest the eSIM device application "LPA" defined by the GSMA eSIM specification, can re-arrange the structure so that for the receiving eUICC device the standard GSMA secure protocol data structure as per FIG. 3 is given again.

It should be noted that the illustrated method has exemplary been described with reference to an exporting eUICC device 110 being arranged on a card and with reference to a target entity being arranged on a server. However, also other configurations are possible. For example, the exporting first eUICC device 110 could be arranged on the control unit 100 and the second eUICC device could also be arranged on a further control unit 600 (transfer from card to card, peer-to-peer transfer). In this way, a transfer of eSIM profile data can be performed between several entities in a very comfortable and safe away.

As a consequence, anti-cloning is supported in a way that relevant key material for decryption is not sent or made available in any way before the whole profile data package was received and sender ensured countermeasures to prevent cloning.

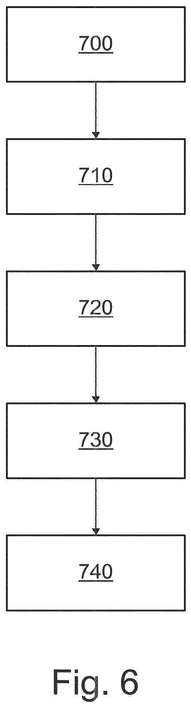

FIG. 6 shows a flow of an embodiment of the proposed method.

In a step 700 encrypted eSIM profile data 30 are provide on the first eUICC device 110, the encrypted eSIM profile data 30 having been encrypted by means of profile encryption keys 20.

In a step 710 the encrypted eSIM profile data 30 are transferred from the first eUICC device 110 to the target entity.

In a step 720 the encrypted eSIM profile data 30 are deleted from the first eUICC device 110.

In a step 730 the profile data encrypting keys 20 are transferred from the first eUICC device 110 to the target entity only after completion of steps b. and c.

In a step 740 the encrypted eSIM profile data 30 are decrypted by means of the profile encryption keys 20 and the decrypted eSIM profile data 30 is installed on the target entity.

A proposed control unit 100 is configured to perform the proposed method. A proposed system comprises at least two proposed control units 100, 600 which are configured to perform the proposed method. A proposed control unit 100 is implemented at least partially as a hardware.

Aspects of the present disclosure are believed to be applicable to a variety of different types of apparatuses, systems and methods involving radar systems and related communications. In certain implementations, aspects of the present disclosure have been shown to be beneficial when used in the context of automotive radar in environments susceptible to the presence of multiple objects within a relatively small region. While not necessarily so limited, various aspects may be appreciated through the following discussion of nonlimiting examples which use exemplary contexts.

Advantageously, in addition to a transfer of different data for example apps, email etc. also eSIM profile data can be transferred between different entities.

In the foregoing description various specific details have been set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference signs may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

As examples, the specification describes and/or illustrates aspects useful for implementing the claimed disclosure by way of various circuits or circuitry which may be illustrated as or using terms such as blocks, modules, device, system, unit, controller, etc. and/or other circuit-type depictions. Such circuits or circuitry are used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU, in one example the logic circuitry may carry out a process or method (sometimes "algorithm") by performing such activities and/or steps associated with the above-discussed functionalities. In other examples, the logic circuitry may carry out a process or method by performing these same activities/operations.

For example, in certain of the above-discussed embodiments, one or more modules are discrete logic circuits or programmable logic circuits configured and arranged for implementing these operations/activities. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described above is used by the programmable circuit to perform the related steps, functions, operations, activities, etc. Depending on the application, the instructions (and/or configuration data) can be configured for implementation in logic circuitry, with the instructions (whether characterized in the form of object code, firmware or software) stored in and accessible from a memory (circuit). As another example, where the specification may make reference to a "first" type of structure, a "second" type of structure, where the adjectives "first" and "second" are not used to connote any description of the structure or to provide any substantive meaning; rather, such adjectives are merely used for English-language antecedence to differentiate one such similarly-named structure from another similarly-named structure.

Based upon the above discussion and illustrations, those skilled in the art will readily recognize, that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps.

It should be noted that the term "comprising" does not exclude other elements or steps and "a" or "an" does not exclude a plurality. Also elements described in association with different embodiments may be combined. It should also be noted, that reference signs in the claims should not be construed as limiting the scope of the claims.

The discloses devices, apparatuses, units, elements, systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer readable medium, which may include storage devices and signals, in compressed or uncompressed form.

It is noted that the embodiments above have been described with reference to different subject-matters. **In** particular, some embodiments may have been described with reference to method-type claims whereas other embodiments may have been described with reference to apparatus-type claims.

However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

It has to be noted that embodiments have been described with reference to different subject matters. In particular, some embodiments have been described with reference to method type claims whereas other embodiments have been described with reference to apparatus type claims.

### Reference signs:

- 10: key creation material
- 20: profile encryption keys
- 30: eSIM profile data
- 100: 1^{st} control unit
- 110: 1^{st} eUICC device
- 120: 1^{st} device application
- 200: server
- 210: 2^{nd} eUICC device
- 220: 2^{nd} device application
- 300: mobile network operator
- 400: end user
- 500: server
- 600: 2^{nd} control unit
- 700..740: method steps
- S1...Sn: segments
- t: time

## Claims

1. Method for transferring eSIM profile data (30) from a first eUICC device (110) to a target entity, comprising the steps:
a. providing encrypted eSIM profile data (30) on the first eUICC device (110), the encrypted eSIM profile data (30) having been encrypted by means of profile encryption keys (20);
b. transferring the encrypted eSIM profile data (30) from the first eUICC device (110) to the target entity;
c. deleting the encrypted eSIM profile data (30) from the first eUICC device (110);
d. transferring the profile data encrypting keys (20) from the first eUICC device (110) to the target entity only after completion of steps b. and c.; and
e. decrypting the encrypted eSIM profile data (30) by means of the profile encryption keys (20) and installing the decrypted eSIM profile data (30) on the target entity;
wherein in step a. the profile encryption keys (20) are encrypted by key creation material (10), which has been agreed upon in a handshake process between the first eUICC device (210) and the target entity;
wherein the profile encryption keys (20) are decrypted by means of the key creation material (10), and wherein the key creation material (10) and the profile encryption keys (20) are generated ephemeral.

2. Method according to claim 1, wherein in step a. the profile encryption keys (20) are generated together with the eSIM profile data (30).

3. Method according to claim 1 or 2, wherein the profile encryption keys (20) are encrypted on the first eUICC device (110) by means of at least one key, wherein the encrypted encryption keys (20) are suitable for a single target entity.

4. Method according to any of the preceding claims, wherein the first eUICC device (110) is arranged on a card and the target entity is a second eUICC device (210).

5. Method according to any of claims 1 to 3, wherein the first eUICC device (110) is arranged on a card and the target entity is arranged on a server (200).

6. Method according to any of the preceding claims, wherein at least a single eSIM profile is transferred from the first eUICC device (110) to the target entity.

7. Control unit (100), wherein the control unit (100) is configured to perform the method of any of claims 1 to 6.

8. System comprising at least two control units (100, 600) according to claim 7.

## Patentansprüche

1. Verfahren zum Übertragen von eSIM-Profildaten (30) von einer ersten eUICC-Vorrichtung (110) zu einer Zielentität, umfassend die Schritte:
a. Bereitstellen verschlüsselter eSIM-Profildaten (30) auf der ersten eUICC-Vorrichtung (110), wobei die verschlüsselten eSIM-Profildaten (30) mittels Profilverschlüsselungsschlüsseln (20) verschlüsselt wurden;
b. Übertragen der verschlüsselten eSIM-Profildaten (30) von der ersten eUICC-Vorrichtung (110) zu der Zielentität;
c. Löschen der verschlüsselten eSIM-Profildaten (30) aus der ersten eUICC-Vorrichtung (110);
d. Übertragen der Profildatenverschlüsselungsschlüssel (20) von der ersten eUICC-Vorrichtung (110) an die Zielentität erst nach Abschluss der Schritte b. und c.; und
e. Entschlüsseln der verschlüsselten eSIM-Profildaten (30) mittels der Profilverschlüsselungsschlüssel (20) und Installieren der entschlüsselten eSIM-Profildaten (30) auf der Zielentität;
wobei in Schritt a. die Profilverschlüsselungsschlüssel (20) durch Schlüsselerstellungsmaterial (10) verschlüsselt werden, das in einem Handshake-Prozess zwischen der ersten eUICC-Vorrichtung (210) und der Zielentität vereinbart wurde;
wobei die Profilverschlüsselungsschlüssel (20) mittels des Schlüsselerstellungsmaterials (10) entschlüsselt werden, und wobei das Schlüsselerstellungsmaterial (10) und die Profilverschlüsselungsschlüssel (20) temporär erzeugt werden.

2. Verfahren nach Anspruch 1, wobei in Schritt a. die Profilverschlüsselungsschlüssel (20) zusammen mit den eSIM-Profildaten (30) erzeugt werden.

3. Verfahren nach Anspruch 1 oder 2, wobei die Profilverschlüsselungsschlüssel (20) auf der ersten eUICC-Vorrichtung (110) mittels mindestens eines Schlüssels verschlüsselt werden, wobei die verschlüsselten Verschlüsselungsschlüssel (20) für eine einzige Zielentität geeignet sind.

4. Verfahren nach einem der vorhergehenden Ansprüche, wobei die erste eUICC-Vorrichtung (110) auf einer Karte angeordnet ist und die Zielentität eine zweite eUICC-Vorrichtung (210) ist.

5. Verfahren nach einem der Ansprüche 1 bis 3, wobei die erste eUICC-Vorrichtung (110) auf einer Karte angeordnet ist und die Zielentität auf einem Server (200) angeordnet ist.

6. Verfahren nach einem der vorhergehenden Ansprüche, wobei mindestens ein einzelnes eSIM-Profil von der ersten eUICC-Vorrichtung (110) zu der Zielentität übertragen wird.

7. Steuereinheit (100), wobei die Steuereinheit (100) dazu ausgelegt ist, das Verfahren nach einem der Ansprüche 1 bis 6 durchzuführen.

8. System, umfassend mindestens zwei Steuereinheiten (100, 600) nach Anspruch 7.

## Revendications

1. Procédé de transfert de données (30) de profil eSIM d'un premier dispositif eUICC (110) à une entité cible, comprenant les étapes de :
a. fourniture de données chiffrées (30) de profil eSIM au premier dispositif eUICC (110), les données chiffrées (30) de profil eSIM ayant été chiffrées au moyen de clés (20) de chiffrement de profil ;
b. transfert des données chiffrées (30) de profil eSIM du premier dispositif eUICC (110) à l'entité cible ;
c. suppression des données chiffrées (30) de profil eSIM du premier dispositif eUICC (110) ;
d. transfert des clés (20) de chiffrement des données de profil du premier dispositif eUICC (110) à l'entité cible uniquement après l'achèvement des étapes b. et c. ; et
e. décryptage des données chiffrées (30) de profil eSIM au moyen des clés (20) de chiffrement de profil et installation des données déchiffrées (30) de profil eSIM sur l'entité cible ;
les clés (20) de chiffrement de profil étant chiffrées, à l'étape a., par des éléments (10) de création de clés qui ont été convenues lors d'un processus de prise de contact entre le premier dispositif eUICC (210) et l'entité cible ;
les clés (20) de chiffrement de profil étant déchiffrées au moyen des éléments (10) de création de clés, et les éléments (10) de création de clés et les clés (20) de chiffrement de profil étant générés à titre éphémère.

2. Procédé selon la revendication 1, dans lequel à l'étape a. les clés (20) de chiffrement de profil sont générées conjointement avec les données (30) de profil eSIM.

3. Procédé selon la revendication 1 ou 2, les clés (20) de chiffrement de profil étant chiffrées sur le premier dispositif eUICC (110) au moyen d'au moins une clé, les clés chiffrées (20) de chiffrement étant adaptées à une seule entité cible.

4. Procédé selon l'une quelconque des revendications précédentes, le premier dispositif eUICC (110) étant agencé sur une carte et l'entité cible étant un second dispositif eUICC (210).

5. Procédé selon l'une quelconque des revendications 1 à 3, le premier dispositif eUICC (110) étant agencé sur une carte et l'entité cible étant agencée sur un serveur (200).

6. Procédé selon l'une quelconque des revendications précédentes, au moins un profil eSIM unique étant transféré du premier dispositif eUICC (110) à l'entité cible.

7. Unité (100) de commande, l'unité (100) de commande étant configurée pour réaliser le procédé selon l'une quelconque des revendications 1 à 6.

8. Système comprenant au moins deux unités (100, 600) de commande selon la revendication 7.
